# FASCICULE DE BREVET EUROPEEN

(11) **EP 1 323 123 B1**
(45) Date de publication et mention de la délivrance du brevet: **12.12.2007**
(21) Numéro de dépôt: 01984072.7
(22) Date de dépôt: 26.06.2001
(51) Int. Cl.: G06K 13/08

(54) **DISPOSITIF DE LECTURE ET DE COLLECTE DE SUPPORTS LISIBLE SANS CONTACT**
LESE- UND SAMMELEINRICHTUNG FÜR KONTAKTFREIE LESBARE MEDIEN
READING AND COLLECTING DEVICE FOR CONTACT-FREE READABLE MEDIA

(30) Priorité: 27.06.2000 FR 0008274
(43) Date de publication de la demande: 02.07.2003
(73) Titulaire: Thales, 75008 Paris (FR)
(72) Inventeur: DELMER, Philippe Thales Intellectual Property, F-94117 Arcueil Cédex (FR); HARLOW, Peter Thales Intellectual Property, F-94117 Arcueil Cédex (FR)
(74) Mandataire: Lucas, Laurent Jacques
(86) Numéro de dépôt international: PCT/FR2001/002018
(87) Numéro de publication internationale: WO 2002/001492

(56) Documents cités:
- FR-A- 2 704 958
- US-A- 3 979 578

## Description

L'invention concerne un dispositif de lecture et de collecte de supports lisibles sans contact. Typiquement ce support est un jeton lisible et inscriptible sans contact via une liaison radio, mais l'invention est applicable à tous les supports qui sont lisibles sans contact, notamment une carte à microcircuit ("carte à puce").

Un jeton ou une carte sans contact peut communiquer à courte distance (une dizaine de centimètres environ) avec un coupleur pourvu d'une antenne, pour toutes les fonctions telles que : écriture, lecture, authentification, etc. Le plus souvent, ce support reçoit également par cette antenne l'énergie nécessaire à son fonctionnement. Ce type de communication à distance est en cours de normalisation selon la norme ISO 14443. Une carte à puce lisible et inscriptible via une liaison radio peut comporter en outre des moyens susceptibles d'être lus par un procédé à contact : lecture magnétique, lecture optique, ou lecture électrique ; pour être lisible et inscriptible aussi par des lecteurs à contact, c'est à dire nécessitant l'introduction dans une machine.

Le dispositif selon l'invention est plus particulièrement destiné à être utilisé dans le domaine de la billettique pour les transports. Il sera décrit pour ce domaine, mais d'autres domaines sont envisageables, notamment la distribution automatique.Les systèmes billettiques des transports publics évoluent depuis plusieurs années de la billetterie classique vers l'utilisation de jetons ou cartes à puce sans contact. Cependant, le coût de ces jetons ou cartes sans contact (plusieurs centaines de fois le prix d'un ticket en papier à piste magnétique) conduit à récupérer et à réutiliser ces supports. Lorsque l'usager entre dans le réseau de transport en utilisant un titre de transport valable pour un seul trajet, le support de ce titre de transport est lu sans l'introduire dans une machine, grâce à la lecture sans contact. Lorsque l'usager sort du réseau de transport, il est obligé d'insérerer le support dans une borne pour obtenir l'ouverture d'un portillon. Le support inséré est lu par un lecteur pour vérifer sa validité, et il est collecté par cette borne si c'est un titre valide ; sinon il est rejeté et rendu à l'usager. Si c'est un titre de transport valable pour plusieurs trajets, il n'est collecté que lorsque sa valeur devient nulle. Il est ensuite revalorisé par une nouvelle inscription, puis revendu. Il peut ainsi être réutilisé plusieurs centaines de fois.

Le dispositif de collecte des supports ne doit collecter que les supports valides car ce sont les seuls qui peuvent être recyclés. Les supports non valides doivent être restitués aux usagers qui les ont introduits dans le dispositif de lecture et de collecte. On connaît des dispositifs de lecture et de collecte de supports lisibles sans contact qui fonctionnent de manière analogue à une machine de vente automatique utilisant des pièces, en ce qui concerne le traitement des supports non valides : L'usager est invité à introduire le support dans un orifice d'entrée. Le support tombe dans un lecteur qui détermine s'il est valide ou non, et qui commande un aiguillage électromécanique. Selon le cas, le support tombe alors dans un panier de collecte des supports valides, ou dans une chute qui le conduit à un orifice de sortie dans lequel l'usager peut le prendre.

Le double circuit en aval de l'aiguillage occupe un volume non négligeable. D'autre part, l'orifice de restitution des supports non valides est nécessairement plus bas que le lecteur puisqu'on utilise la gravité pour amener le support vers l'orifice de sortie. Mais cet orifice ne doit pas être très bas, pour ne pas obliger l'usager à se baisser. La conception d'une borne de péage comportant un tel dispositif de lecture et de collecte est donc délicate.

Le but de l'invention est de proposer un dispositif de lecture et de collecte qui soit plus simple à réaliser que les dispositifs connus.

L'objet de l'invention est un dispositif de lecture et de collecte de supports lisibles sans contact, comportant :
- une entrée permettant d'introduire un support dans le dispositif de lecture et de collecte ;
- des moyens de lecture comportant un circuit d'émission-réception radio pour lire un support ;
- des moyens pour collecter les supports qui sont reconnus valides par les moyens de lecture ;
caractérisé en ce que le circuit d'émission-réception radio est disposé de manière à pouvoir lire un support dans une zone en amont de l'entrée du dispositif, de telle manière qu'un support peut être lu avant qu'il soit introduit dans l'entrée ;
et en ce que les moyens pour collecter comportent des moyens pour empêcher l'introduction d'un support dans l'entrée du dispositif de lecture et de collecte lorsque ce support n'est pas reconnu valide par les moyens de lecture.

Le dispositif ainsi caractérisé est simple à réaliser car il ne comporte pas de moyens pour restituer les supports non valides, grâce au faits que les jetons non valides ne peuvent jamais être introduits à l'intérieur du dispositif. Les moyens d'émission-réception radio étant disposés de façon à rayonner dans la zone qui est en amont de l'entrée, ils peuvent lire un jeton avant même qu'il soit introduit dans l'entrée. Les moyens pour empêcher l'introduction bloquent l'entrée en l'absence de support reconnu valide.

L'invention sera mieux comprise et d'autres caractéristiques apparaîtront à l'aide de la description ci-dessous et des figures l'accompagnant :

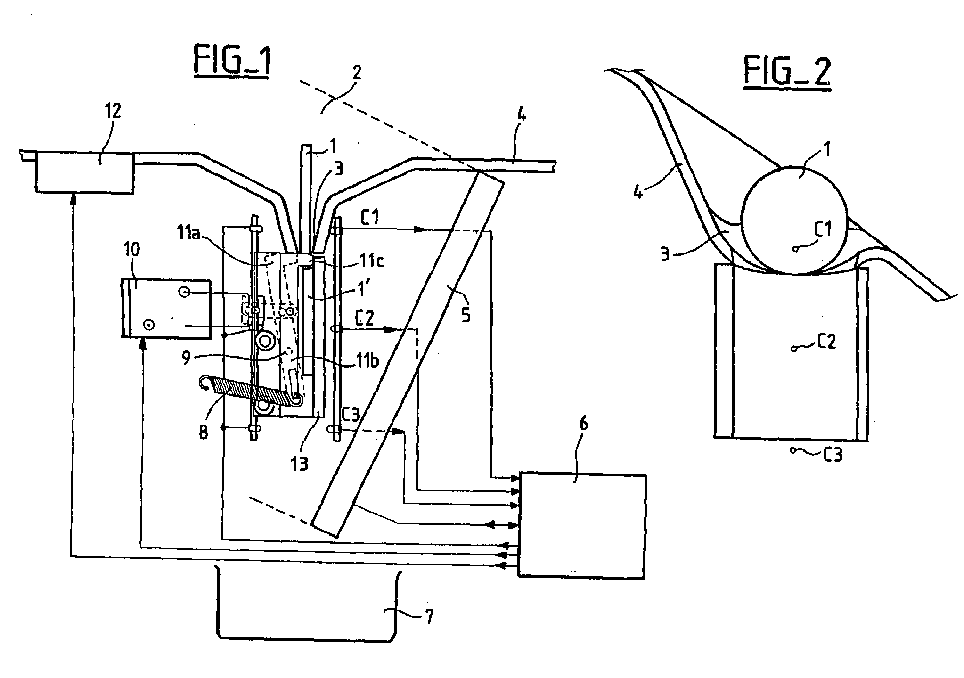

- La figure 1 représente schématiquement une vue de face d'un exemple de réalisation du dispositif selon l'invention.
- La figure 2 représente schématiquement une vue de côté de cet exemple de réalisation.
Cet exemple de réalisation comporte :
- une paroi 4 en matière plastique transparente pour les ondes radio utilisées pour la lecture sans contact ;
- une entrée 3 munie d'une goulotte, pour permettre d'introduire facilement, à la main, un jeton 1 à lecture sans contact, dans cette entrée 3 ;
- une unité de commande 6, constituée essentiellement d'un microcontrôleur ;
- un circuit 5 d'émission-réception radio, reliée à l'unité de commande 6 ;
- une trappe 11c supportée par un levier 11 a, 1 1 b pivotant autour d'un axe 9, ce levier comportant un premier bras 11a qui peut être tiré par un solénoïde 10, et un second bras 11 b qui est tiré par un ressort 8 pour ramener la trappe 11 c en position de repos, c'est à dire obstruant l'entrée 3 ;
- trois capteurs de position C1, C2, C3, optiques, qui détectent la présence du jeton respectivement dans trois positions :
   -- devant l'entrée 3 ;
   -- dans une position dite de réinitialisation, où une écriture est réalisée pour ré-initialiser la valeur attribuée à ce support pour constituer un nouveau titre de transport ;
   -- dans une position dite de collecte effective ,où le jeton passe lorsqu'il tombe après avoir été ré-initialisé ;
- un indicateur lumineux et sonore 12 actionné par l'unité de commande 6 lorsque le jeton 1 présenté devant l'entrée 3 n'est pas reconnu valide.

Le circuit d'émission-réception radio 5 est disposé de façon à rayonner dans la zone 2 qui est en amont de l'entrée 3, pour pouvoir lire un jeton avant même qu'il soit introduit dans l'entrée 3 ; et de façon à rayonner aussi en aval de l'entrée 3 pour pouvoir ré-initialiser ce jeton après son introduction dans l'entrée 3.

Lorsque le solénoïde 10 n'est pas alimenté, le premier bras 11a de la trappe 11 c est en position de repos, l'entrée 3 est fermée. Lorsque l'solénoïde 10 est alimenté, il tire le premier bras 11a en position de travail, l'entrée 3 est ouverte ; par contre, le second bras 11 b resserre le passage entre ce second bras et une paroi 13 qui guide le jeton. Le jeton l'est alors immobilisé, jusqu'à ce que le solénoïde 10 ne soit plus alimenté.

Lorsqu'un usager présente un jeton 1 devant l'entrée 3, le capteur C1 détecte sa présence. L'unité de commande 6 lit le jeton 1 au moyen du circuit 5, grâce au fait qu'il peut rayonner dans la zone 2, en amont de l'entrée de l'entrée 3.

Si le jeton 1 n'est pas reconnu valide par l'unité de contrôle 6, celle-ci actionne l'indicateur 12 pour prévenir l'usager qu'il ne peut pas l'introduire dans l'entrée 3, et qu'il doit donc le garder.

Si le jeton 1 est reconnu valide par l'unité de contrôle 6, celle-ci alimente le solénoïde 10 pour ouvrir la trappe 11. L'usager introduit son jeton 1 dans l'entrée 3.

Lorsque le capteur C2 détecte qu'un jeton l' est arrivé en position de réinitialisation, l'unité de commande 6 écrit dans le jeton l' au moyen du circuit 5, grâce au fait qu'il peut rayonner aussi dans la zone en aval de l'entrée de l'entrée 3. Lorsque la ré-initialisation est terminée, l'unité de commande 6 cesse d'alimenter le solénoïde 10. La trappe 11 c referme l'entrée et son second bras 11b libère le jeton 1'. Ce dernier tombe alors dans un réceptacle de collecte 7. Le capteur C3 détecte le passage du jeton l' vers le réceptacle 7, et en informe l'unité de commande 6. Elle peut alors traiter un nouveau jeton présenté à l'entrée de l'entrée.

## Revendications

1. Dispositif de lecture et de collecte de supports (1) lisibles sans contact, comportant :
- une entrée (3) permettant d'introduire un support (1) dans le dispositif de lecture et de collecte ;
- des moyens de lecture (5, 6) comportant un circuit d'émission-réception radio (5) pour lire un support (1) ;
- des moyens (6 à 11) pour collecter les supports qui sont reconnus valides par les moyens de lecture (5, 6) ;
**caractérisé en ce que** le circuit d'émission-réception radio (5, 6) est disposé de manière à pouvoir lire un support (1) dans une zone (2) en amont de l'entrée (3) du dispositif, de telle manière qu'un support (1) peut être lu avant qu'il soit introduit dans l'entrée (3) ;
et **en ce que** les moyens pour collecter (6 à 11) comportent des moyens (11 c) pour empêcher l'introduction d'un support dans l'entrée (3) du dispositif de lecture et de collecte lorsque ce support n'est pas reconnu valide par les moyens de lecture (5, 6).

2. Dispositif selon la revendication 1, **caractérisé en ce que** les moyens pour empêcher l'introduction d'un support comportent :
- une trappe (11c) obstruant l'entrée d'entrée (3) ;
- et un actionneur (10) commandé par les moyens de lecture, pour ouvrir la trappe seulement si un support est reconnu valide.

3. Dispositif selon la revendication 2, **caractérisé en ce qu'**il comporte en outre des moyens (11 b) pour immobiliser un support (1') dans le dispositif, dans une position où il peut subir une écriture ; et **en ce que** ces moyens (11b) pour immobiliser un support sont couplés aux moyens (11c) pour empêcher l'introduction d'un support, de telle manière qu'une même opération referme l'entrée (3) du dispositif et libère un support (1') qui était immobilisé dans la position où il peut subir une écriture.

4. Dispositif selon la revendication 1, **caractérisé en ce qu'**il comporte en outre des moyens (6, 12) pour signaler à utilisateur que le support qu'il s'apprête à introduire n'est pas valide, lorsque ce support n'est pas reconnu valide par les moyens de lecture (5, 6).

5. Dispositif selon la revendication 1, **caractérisé en ce qu'**il comporte en outre des moyens (C1, 6) pour détecter la présence d'un support (1) devant l'entrée (3), et déclencher alors une lecture du support en vue de déterminer s'il est valide.

6. Dispositif selon la revendication 1, **caractérisé en ce qu'**il comporte en outre des moyens (C2, 6) pour détecter la présence d'un support (1') en aval de l'entrée, et déclencher alors une opération d'écriture dans le support.

7. Dispositif selon la revendication 1, **caractérisé en ce qu'**il comporte en outre des moyens (C3, 6) pour détecter la collecte effective d'un support.

## Claims

1. Device for reading and collecting contactlessly readable media (1), comprising:
- an entrance (3) allowing a medium (1) to be inserted into the reading and collecting device;
- reading means (5, 6) comprising a radio transmitting-receiving circuit (5) for reading a medium (1) ;
- means (6 to 11) for collecting the media which are recognized as valid by the reading means (5, 6);
**characterized in that** the radio transmitting-receiving circuit (5, 6) is placed so that it can read a medium (1) in an area (2) upstream of the entrance (3) of the device, such that a medium (1) can be read before it is inserted into the entrance (3);
and **in that** the collection means (6 to 11) comprise means (11c) for preventing a medium being inserted into the entrance (3) of the reading and collecting device when this medium is not recognized as valid by the reading means (5, 6).

2. Device according to Claim 1, **characterized in that** the means for preventing the insertion of a medium comprise:
- a flap (11c) blocking the inlet of the entrance (3) ;
- and an actuator (10) controlled by the reading means, in order to open the flap only if a medium is recognized as valid.

3. Device according to Claim 2, **characterized in that** it further comprises means (11b) for immobilizing a medium (1') in the device, in a position where it can be written to; and **in that** these means (11b) for immobilizing a medium are coupled to the means (11c) for preventing the insertion of a medium, such that the same operation again closes the entrance (3) of the device and releases a medium (1') which was immobilized in the position where it can be written to.

4. Device according to Claim 1, **characterized in that** it further comprises means (6, 12) for indicating to the user that the medium that he is preparing to insert is not valid, when this medium is not recognized as valid by the reading means (5, 6).

5. Device according to Claim 1, **characterized in that** it further comprises means (C1, 6) for detecting the presence of a medium (1) in front of the entrance (3), and then for triggering an operation of reading the medium for the purpose of determining whether it is valid.

6. Device according to Claim 1, **characterized in that** it further comprises means (C2, 6) for detecting the presence of a medium (1') downstream of the entrance, and then for triggering an operation of writing to the medium.

7. Device according to Claim 1, **characterized in that** it further comprises means (C3, 6) for detecting the effective collection of a medium.

## Patentansprüche

1. Lese- und Sammelvorrichtung für kontaktfreie lesbare Träger (1), die aufweist:
- einen Eingang (3), der das Einführen eines Trägers (1) in die Lese- und Sammelvorrichtung erlaubt;
- Lesemittel (5, 6), die eine Funk-Sende-/Empfangsschaltung (5) aufweisen, um einen Träger (1) zu lesen;
- Mittel (6 bis 11), um die Träger zu sammeln, die von den Lesemitteln (5, 6) als gültig erkannt werden;
**dadurch gekennzeichnet, dass** die Funk-Sende-/Empfangsschaltung (5, 6) so angeordnet ist, dass sie einen Träger (1) in einer Zone (2) vor dem Eingang (3) der Vorrichtung lesen kann, damit ein Träger (1) gelesen werden kann, ehe er in den Eingang (3) eingeführt wird;
und dass die Sammelmittel (6 bis 11) Mittel (11c) aufweisen, um das Einführen eines Trägers in den Eingang (3) der Lese- und Erfassungsvorrichtung zu verhindern, wenn dieser Träger nicht von den Lesemitteln (5, 6) als gültig erkannt wird.

2. Vorrichtung nach Anspruch 1, **dadurch gekennzeichnet, dass** die Mittel zum Verhindern des Einführens eines Trägers aufweisen:
- eine Falle (11c), die den Eingang (3) verschließt;
- und ein Betätigungsglied (10), das von den Lesemitteln gesteuert wird, um die Falle nur zu öffnen, wenn ein Träger als gültig erkannt wird.

3. Vorrichtung nach Anspruch 2, **dadurch gekennzeichnet, dass** sie außerdem Mittel (11b) aufweist, um einen Träger (1') in der Vorrichtung in einer Stellung zu fixieren, in der er beschrieben werden kann; und dass diese Mittel (11b) zum Fixieren eines Trägers mit den Mitteln (11c) zum Verhindern des Einführens eines Trägers gekoppelt sind, so dass der gleiche Vorgang den Eingang (3) der Vorrichtung verschließt und einen Träger (1') freigibt, der in der Stellung fixiert war, in der beschrieben werden kann.

4. Vorrichtung nach Anspruch 1, **dadurch gekennzeichnet, dass** sie außerdem Mittel (6, 12) aufweist, um dem Benutzer anzuzeigen, dass der Träger, den er sich anschickt, einzufügen, nicht gültig ist, wenn dieser Träger nicht von den Lesemitteln (5, 6) als gültig erkannt wird.

5. Vorrichtung nach Anspruch 1, **dadurch gekennzeichnet, dass** sie außerdem Mittel (C1, 6) aufweist, um das Vorhandensein eines Trägers (1) vor dem Eingang (3) zu erfassen und dann das Lesen des Trägers zur Bestimmung seiner Gültigkeit auszulösen.

6. Vorrichtung nach Anspruch 1, **dadurch gekennzeichnet, dass** sie außerdem Mittel (C2, 6) aufweist, um das Vorhandensein eines Trägers (1') hinter dem Eingang zu erfassen und dann einen Schreibvorgang im Träger auszulösen.

7. Vorrichtung nach Anspruch 1, **dadurch gekennzeichnet, dass** sie außerdem Mittel (C3, 6) aufweist, um das tatsächliche Sammeln eines Trägers zu erfassen.
